# FASCICULE DE BREVET EUROPEEN

(11) **EP 0 524 048 B1**
(45) Date de publication et mention de la délivrance du brevet: **27.12.1995**
(21) Numéro de dépôt: 92401895.5
(22) Date de dépôt: 02.07.1992
(51) Int. Cl.: F16J 15/28

(54) **Joint d'étanchéité à âme métallique et garnitures en graphite expansé**
Dichtung mit metallischem Kern und expandierte Graphitdichtung
Seal with metallic core and packing made of expanded graphite

(30) Priorité: 08.07.1991 FR 9108556
(43) Date de publication de la demande: 20.01.1993
(73) Titulaire: Société des Joints Industriels IMPERATOR, F-41290 Oucques (FR)
(72) Inventeur: Suzanne, Claude, F-41260 La Chaussée Saint-Victor (FR)
(74) Mandataire: Netter, André

(56) Documents cités:
- EP-A- 0 069 034
- DE-U- 7 811 719
- FR-A- 2 389 055
- US-A- 2 511 260
- US-A- 3 076 658

## Description

L'invention concerne les joints et les assemblages d'étanchéité à âme métallique, selon les préambules des revendications 1 et 10, connus du US-A-3076658.

Dans certains types de vannes, on utilise pour assurer l'étanchéité entre le corps ou fût et le chapeau un joint annulaire dit "autoclave" en métal assez ductile comme le fer Armco, parfois revêtu d'un métal tendre tel que l'argent.

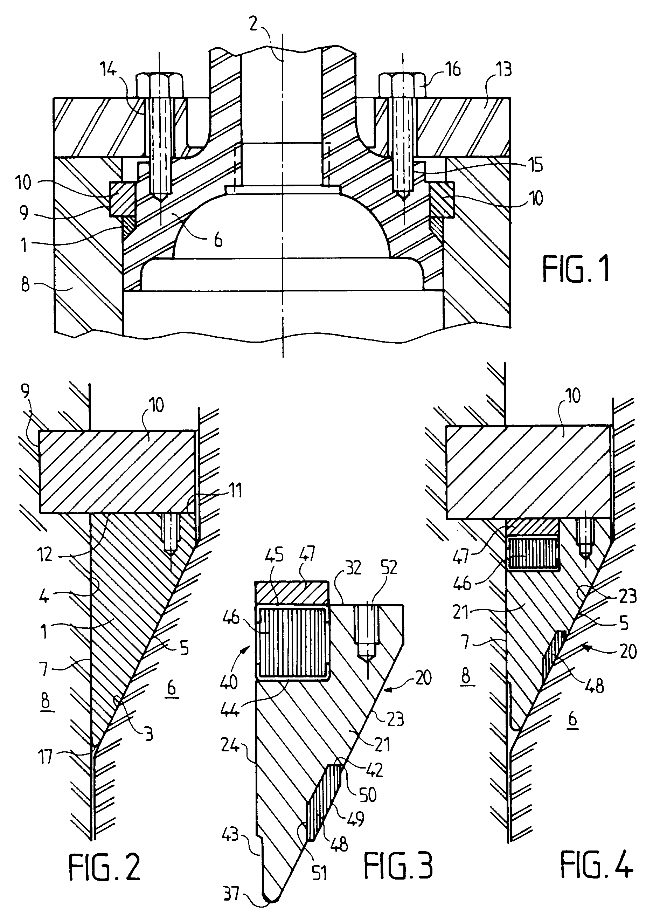

Un tel joint et sa disposition dans la vanne sont illustrés aux figures 1 et 2. Le joint 1 présente en section transversale, comme vu dans le plan de coupe des figures 1 et 2 passant par l'axe 2 de sa configuration annulaire, la forme d'un trapèze rectangle, dont le côté oblique 3 fait avant montage un angle d'environ 24° avec la grande base 4, ce côté et cette base étant raccordés par un arrondi 17. Le côté 3 est situé entre l'axe 2 et la base 4, parallèle à ce dernier, de sorte que le côté 3 et la base 4 définissent respectivement une surface tronconique concave et une surface cylindrique convexe du joint, la première reposant sur une surface tronconique convexe 5 du chapeau 6 de la vanne et la seconde étant accolée à une surface cylindrique interne 7 d'une portion tubulaire 8 du fût. Les génératrices des surfaces 5 et 7 font entre elles, avant montage du joint, un angle aigu légèrement supérieur à celui du côté 3 et de la base 4, soit environ 25°.

Une gorge annulaire 9 ménagée dans la surface cylindrique 7 loge partiellement plusieurs segments 10 disposés à la suite les uns des autres le long de la circonférence du fût 8. Chacun de ces segments 10 fait saillie à partir de la gorge 9 vers l'intérieur du fût et présente une surface plane radiale 11 contre laquelle s'appuie la surface plane radiale définie par le côté 12 de la section trapézoïdale du joint perpendiculaire aux bases.

Dans le présent mémoire, pour faciliter la lecture des dessins, des surfaces annulaires sont désignées par les mêmes numéros de référence que les lignes qui les représentent en section transversale axiale. Sauf indications particulières, les termes "axial", "radial", "intérieur", "extérieur", s'entendent par rapport à l'axe de la configuration annulaire du joint.

Lors de l'assemblage de la vanne, on enfonce le chapeau 6, muni du joint 1, dans le fût 8 jusqu'à ce que la gorge 9 soit suffisamment dégagée pour permettre l'introduction des segments 10. On fait alors remonter le chapeau jusqu'à ce que la face 12 du joint vienne en contact avec les segments 10. On place sur l'extrémité ouverte du fût et sur la région périphérique du chapeau un couvercle annulaire 13 présentant des trous traversants 14 en regard de trous filetés 15 prévus dans le chapeau. Des vis 16 se vissant dans les trous 15 et dont les têtes s'appuient sur la face extérieure du couvercle 13 permettent de serrer le joint entre la surface tronconique 5 du chapeau et la surface 11 des segments 10 avec une force élevée. En raison de la différence d'inclinaison entre les surfaces tronconiques 3 et 5, la région du joint voisine de l'arête arrondie 17 est écrasée et s'applique étroitement contre les surfaces 5 et 7, assurant une excellente étanchéité entre le chapeau et le fût.

La très forte pression exercée par le joint sur la surface 7 du fût provoque une déformation de celle-ci et une pénétration du joint dans l'épaisseur du fût. Ceci rend l'extraction du joint très difficile lorsque la vanne doit être démontée, nécessitant une main-d'oeuvre très importante et conduisant fréquemment à une détérioration du fût et à la nécessité d'un réusinage de celui-ci.

Le but de l'invention est de remédier à ces inconvénients.

A cet effet, l'invention propose un joint et un assemblage d'étanchéité à âme métallique présentant une configuration sensiblement annulaire et comportant des première et seconde surfaces d'étanchéité et une surface d'appui sensiblement annulaires, les première et seconde surfaces d'étanchéité formant entre elles un angle aigu et la surface d'appui étant comprise dans ledit angle aigu, de façon que, lorsque le joint est assemblé, une poussée exercée sur elle par un élément d'appui amène les surfaces d'étanchéité en contact étanche avec des surfaces coopérantes respectives de l'assemblage, et étant adjacente à la première surface d'étanchéité, caractérisé en ce qu'il comprend une première garniture en matière tendre logée dans une feuillure de l'âme métallique ménagée dans la première surface d'étanchéité et dans la surface d'appui, et une seconde garniture en matière tendre logée dans un lamage de l'âme métallique ménagé dans la seconde surface d'étanchéité, ainsi qu'une bague d'appui rigide recouvrant la première garniture du côté de la surface d'appui et également logée, à l'état monté du joint, dans ladite feuillure, en venant en affleurement de la partie de la surface d'appui définie par l'âme métallique, le contact étanche des première et seconde surfaces d'étanchéité étant assuré par les première et seconde garnitures respectivement.

On entend par "matière tendre" une matière qui peut se déformer ou se comprimer sous un effort sensiblement moins élevé que celui requis pour déformer le métal de l'âme.

Très avantageusement, les première et seconde garnitures sont en graphite expansé, les volumes des logements pour celles-ci étant choisis de telle sorte que la densité du graphite dans le joint monté soit comprise entre 1,6 et 1,9 environ.

Le joint comprend de préférence des moyens de retenue pour empêcher le fluage de la première garniture, notamment lorsque celle-ci est en graphite expansé, le long de la première surface d'étanchéité, en regard de l'âme métallique d'une part et de la bague d'appui d'autre part. Ces moyens peuvent comprendre deux coupelles annulaires entre lesquelles la première garniture est serrée dans la direction d'appui de la bague d'appui, ces deux coupelles présentant, au niveau de la première surface d'étanchéité, des bords respectifs recourbés l'un vers l'autre et se terminant à distance l'un de l'autre.

L'âme métallique, les garnitures, la bague d'appui et le cas échéant les coupelles annulaires sont de préférence solidaires les unes des autres.

Dans une forme de réalisation de l'invention, la première surface d'étanchéité et la surface d'appui forment entre elles, en section transversale, un angle sensiblement droit. Les première et seconde surfaces d'étanchéité et la surface d'appui peuvent être sensiblement cylindrique, tronconique et plane, respectivement, et un évidement de faible profondeur peut être ménagé dans la première surface d'étanchéité, dans sa région adjacente à la seconde surface d'étanchéité.

L'invention vise également un procédé de réalisation d'un assemblage rendu étanche par un joint tel que défini ci-dessus, dans lequel on met en place, dans un élément tubulaire de l'assemblage, un élément central dont une surface annulaire forme avec la surface interne de l'élément tubulaire un logement annulaire, et on dispose le joint dans ledit logement, ses première et seconde surfaces d'étanchéité venant en regard de ladite surface interne et en contact avec ladite surface annulaire de l'élément central respectivement, puis on déplace axialement l'élément central par rapport à l'élément tubulaire, de façon à amener la bague d'appui contre une butée solidaire de l'élément tubulaire, jusqu'à ce que la butée et la surface annulaire de l'élément central viennent en contact avec l'âme métallique.

Dans ce procédé, l'élément tubulaire et l'élément central peuvent notamment appartenir respectivement au fût et au chapeau d'une vanne.

D'autres caractéristiques et avantages de l'invention ressortiront de la description détaillée d'un exemple de réalisation, et des dessins annexés dans lesquels :
- la figure 1 est une vue partielle en coupe axiale d'une vanne équipée d'un joint annulaire métallique connu;
- la figure 2 est un détail agrandi de la figure 1;
- la figure 3 est une demi-vue en coupe axiale d'un joint selon l'invention; et
- la figure 4 est une vue analogue à la figure 2, dans laquelle le joint connu est remplacé par le joint de la figure 3.

Les figures 1 et 2 ont déjà été décrites en relation avec l'exposé de la technique antérieure.

Le joint 20 illustré à la figure 3, destiné à remplacer le joint 1 dans l'assemblage des figures 1 et 2, sans modification des autres éléments de cet assemblage, comprend une âme 21 en acier inoxydable dont la forme diffère de celle du joint 1 d'une part en ce que l'angle formé, en section transversale, par sa surface tronconique 23 et par sa surface cylindrique 24, est légèrement augmentée pour correspondre à l'angle formé par la surface 5 du chapeau et la surface 7 du fût, d'autre part en ce qu'y sont ménagés trois évidements annulaires. Un premier évidement est une feuillure de section rectangulaire 40 ménagée à partir des faces cylindrique 24 et radiale 32 de l'âme correspondant respectivement aux faces 4 et 12 du joint 1. Le second évidement est un lamage ménagé dans la face tronconique 23 correspondant à la face 3 du joint 1. Enfin, le troisième évidement 43 est ménagé sur une faible profondeur sensiblement uniforme dans la face 24 et s'étend à partir de l'arête arrondie 37, en direction de la feuillure 40, sur une distance inférieure ou à peu près égale à la distance séparant ce même arrondi du lamage 42.

La feuillure 40 reçoit un sous-ensemble occupant sensiblement tout son volume et composé de deux coupelles annulaires en tôle d'acier inoxydable 44 et 45 d'une fraction de millimètre d'épaisseur encadrant une garniture de graphite expansé 46. Chacune des coupelles 44 et 45 comprend un fond situé sensiblement dans un plan radial et deux rebords respectivement intérieur et extérieur s'étendant sensiblement dans des surfaces cylindriques. Le fond de la coupelle 44 repose sur la paroi radiale de la feuillure 40, et celui de la coupelle 45 vient, à l'état neuf du joint comme montré à la figure 4, sensiblement en affleurement de la face radiale 32 de l'âme 21. Les rebords intérieurs des deux coupelles et la surface libre de la garniture 46 reliant ceux-ci s'étendent le long de la paroi cylindrique intérieure de la feuillure 40, et leurs rebords extérieurs, ainsi que la surface libre de la garniture 46 s'étendant entre ceux-ci, viennent sensiblement en affleurement de la face cylindrique extérieure 24 de l'âme 21. Le fond de la coupelle 45 est recouvert par une bague d'appui rigide en acier inoxydable présentant une section transversale axiale rectangulaire dont la longueur radiale coïncide avec celle de la feuillure 40 et des coupelles 44 et 45. Une seconde garniture de graphite expansé 48 remplit entièrement le lamage 42 et fait saillie, à l'état neuf du joint, hors de celui-ci, au-delà de la face tronconique 23 de l'âme 21. La garniture 48 présente une surface libre tronconique 49 de même angle au sommet que les surfaces 23 et 5, et est située entièrement à l'extérieur de la nappe conique contenant cette surface libre 49. De plus, la garniture 48 et le lamage 42 sont limités dans la direction radiale par deux surfaces cylindriques, le lamage 42 présentant deux portions de paroi 50 et 51 adjacentes à la face 23 et contenues respectivement dans ces deux surfaces cylindriques.

L'âme 21, les coupelles 44 et 45, les garnitures 46 et 48 et la bague 47 sont solidaires les unes des autres, les fonds des coupelles 44 et 45 étant par exemple soudés à l'âme et à la bague d'appui respectivement, la garniture 46 collée aux fonds des coupelles et la garniture 48 au fond du lamage 42. Des trous taraudés 52 sont ménagés parallèlement à l'axe du joint dans l'âme 21 et débouchent dans la face radiale 32. Ces trous servent à attacher le joint à un outil pour son extraction lors du démontage de l'assemblage. De tels trous existent également dans le joint connu illustré à la figure 2.

La mise en place du joint selon l'invention s'effectue comme décrit ci-dessus pour le joint connu. Dans un premier temps, le joint vient en contact avec la surface 5 du chapeau 6 seulement par la surface libre tronconique 49 de la garniture 48, puis il vient en contact avec les segments de butée 10 par la face radiale libre de la bague d'appui 47. Lors du vissage des vis 16, la bague 47 pénètre dans le lamage 40 et les garnitures 46 et 48 sont comprimées jusqu'à ce que la face 32 de l'âme 21 vienne à son tour en appui sur les segments 10 et que la surface tronconique 3 de l'âme vienne dans sa totalité en contact avec la surface 5 du chapeau. L'étanchéité entre le chapeau et le fût 8 est alors assurée par le contact des garnitures 46 et 48 convenablement comprimées avec les surfaces 7 et 5, arrêtant les fuites de fluide entre le joint d'une part et le fût et le chapeau respectivement d'autre part. Il n'est pas nécessaire d'exercer une pression très élevée qui déformerait l'âme 21 du joint et le fût 8, de sorte que le joint peut être si nécessaire démonté facilement et remplacé sans autre intervention.

L'évidement 43 sert à faciliter l'introduction du joint dans le fût. Il peut être supprimé sans affecter le fonctionnement du joint. De même, les coupelles 40 et 45 et la bague d'appui 47 peuvent être remplacées par d'autres moyens pour empêcher le fluage de la garniture 46 d'une part et assurer une répartition uniforme sur tout le périmètre de celle-ci des efforts exercés par les segments de butée 10. Par exemple, la coupelle 45 et la bague 47 peuvent être remplacées par une pièce unique d'une forme et d'une épaisseur appropriées pour ces deux fonctions. Le fond de la coupelle 45 peut se situer, à l'état neuf du joint, dans un autre plan que celui de la face 32 de l'âme. La forme de la section transversale du joint peut également être modifiée. Elle peut être par exemple triangulaire, la longueur de la petite base du trapèze étant réduite à zéro.

## Revendications

1. Assemblage comprenant un élément tubulaire (8), un élément central (6) dont une surface annulaire (5) forme avec la surface interne (7) de l'élément tubulaire un logement annulaire, un joint d'étanchéité (20) à âme métallique (21) de configuration sensiblement annulaire disposé dans ledit logement, le joint comportant des première et seconde surfaces d'étanchéité (24,23) et une surface d'appui (32) adjacente à la première surface d'étanchéité, sensiblement annulaires, les première et seconde surfaces d'étanchéité formant entre elles un angle aigu et la surface d'appui étant comprise dans ledit angle aigu, et un élément d'appui (10) exerçant une poussée sur la surface d'appui dans la direction axiale pour appliquer les surfaces d'étanchéité de façon étanche contre ladite surface interne et ladite surface annulaire (7,5) respectivement, le joint comprenant une première garniture (46) en matière tendre logée dans une feuillure (40) de l'âme métallique ménagée dans la première surface d'étanchéité et dans la surface d'appui, caractérisé en ce que le joint comprend une seconde garniture (48) en matière tendre logée dans un lamage (42) de l'âme métallique ménagé dans la seconde surface d'étanchéité, ainsi qu'une bague d'appui rigide (47) recouvrant la première garniture du côté de la surface d'appui et également logée dans ladite feuillure en venant en affleurement de l'âme métallique pour définir la surface d'appui (32) en contact avec l'élément d'appui (10), le contact étanche des première et seconde surfaces d'étanchéité étant assuré par les première et seconde garnitures respectivement.

2. Assemblage selon la revendication 1, caractérisé en ce que les première et seconde garnitures sont en graphite expansé, les volumes des logements pour celles-ci étant choisis de telle sorte que la densité du graphite dans le joint monté soit comprise entre 1,6 et 1,9 environ.

3. Assemblage selon l'une des revendications 1 et 2, caractérisé en ce qu'il comprend des moyens de retenue (44,45) pour empêcher le fluage de la première garniture le long de la première surface d'étanchéité, en regard de l'âme métallique d'une part et de la bague d'appui d'autre part.

4. Assemblage selon la revendication 3, caractérisé en ce que lesdits moyens de retenue comprennent deux coupelles annulaires (44,45) entre lesquelles la première garniture est serrée dans la direction d'appui de la bague d'appui, ces deux coupelles présentant, au niveau de la première surface d'étanchéité, des bords respectifs recourbés l'un vers l'autre et se terminant à distance l'un de l'autre.

5. Assemblage selon l'une des revendications précédentes, caractérisé en ce que l'âme métallique, les garnitures, la bague d'appui et le cas échéant les coupelles annulaires sont solidaires les unes des autres.

6. Assemblage selon l'une des revendications précédentes, caractérisé en ce que la première surface d'étanchéité et la surface d'appui forment entre elles, en section transversale, un angle sensiblement droit.

7. Assemblage selon la revendication 6, caractérisé en ce que les première et seconde surfaces d'étanchéité et la surface d'appui sont sensiblement cylindrique, tronconique et plane respectivement.

8. Assemblage selon la revendication 7, caractérisé en ce qu'un évidement (43) de faible profondeur est ménagé dans la première surface d'étanchéité, dans sa région adjacente à la seconde surface d'étanchéité.

9. Assemblage selon l'une des revendications précédentes, caractérisé en ce que ledit élément tubulaire et ledit élément central appartiennent respectivement au fût et au chapeau d'une vanne.

10. Joint d'étanchéité (20) à âme métallique (21) de configuration sensiblement annulaire, propre à faire partie d'un assemblage selon l'une des revendications précédentes, ce joint comportant des première et seconde surfaces d'étanchéité (24,23) et une surface d'appui (32) adjacente à la première surface d'étanchéité, sensiblement annulaires, les première et seconde surfaces d'étanchéité formant entre elles un angle aigu et la surface d'appui étant comprise dans ledit angle aigu, et comprenant une première garniture (46) en matière tendre logée dans une feuillure (40) de l'âme métallique ménagée dans la première surface d'étanchéité et dans la surface d'appui, caractérisé par une seconde garniture (48) en matière tendre logée dans un lamage (42) de l'âme métallique ménagé dans la seconde surface d'étanchéité, et par une bague d'appui rigide (47) recouvrant la première garniture du côté de la surface d'appui et pouvant se déplacer dans la direction axiale avec compression de la première garniture jusqu'à se loger dans ladite feuillure en venant en affleurement de l'âme métallique pour définir la surface d'appui (32).

11. Procédé de réalisation d'un assemblage selon l'une des revendications 1 à 9, dans lequel on met en place l'élément central (6) dans l'élément tubulaire (8), on dispose le joint dans ledit logement, ses première et seconde surfaces d'étanchéité (24,23) venant en regard de ladite surface interne et en contact avec ladite surface annulaire de l'élément central respectivement et la bague d'appui (47) faisant saillie axialement par rapport à l'âme, et on dispose l'élément d'appui (10) solidairement de l'élément tubulaire, en regard de la surface d'appui, puis on déplace axialement l'élément central par rapport à l'élément tubulaire, de façon à amener la bague d'appui (47) contre l'élément d'appui et à la faire pénétrer dans la feuillure jusqu'à ce que l'élément d'appui et la surface annulaire de l'élément central viennent en contact avec l'âme métallique.

## Claims

1. Assembly comprising a tubular element (8), a central element (6), an annular surface (5) of which forms an annular housing with the inner surface (7) of the tubular element, a seal (20) with a metal core (21) of substantially annular configuration arranged in the said housing, the seal comprising substantially annular first and second sealing surfaces (24, 23) and a substantially annular bearing surface (32) adjacent to the first sealing surface, the first and second sealing surfaces together forming an acute angle, and the bearing surface being included within the said acute angle, and a bearing element (10) exerting a pressure on the bearing surface in the axial direction in order to press the sealing surfaces against the said inner surface and the said annular surface (7, 5) respectively in a sealed manner, the seal comprising a first packing (46) made from soft material accommodated in a rebate (40) of the metal core formed in the first sealing surface and in the bearing surface, characterized in that the seal comprises a second packing (48) made from soft material accommodated in a countersink (42) of the metal core formed in the second sealing surface, as well as a rigid bearing ring (47) covering the first packing on the side of the bearing surface and likewise accommodated in the said rebate, coming flush with the metal core so as to define the bearing surface (32) in contact with the bearing element (10), the sealing contact between the first and second sealing surfaces being ensured by the first and second packings respectively.

2. Assembly according to Claim 1, characterized in that the first and second packings are made from expanded graphite, the volumes of the housings for the said packings being selected such that the density of the graphite in the assembled seal lies between 1.6 and 1.9 approximately.

3. Assembly according to one of Claims 1 and 2, characterized in that it comprises retention means (44, 45) for preventing the creep of the first packing along the first sealing surface, relative to the metal core on the one hand and the bearing ring on the other hand.

4. Assembly according to Claim 3, characterized in that the said retention means comprise two annular washers (44, 45) between which the first packing is gripped in the bearing direction of the bearing ring, these two washers having, in the region of the first sealing surface, respective edges bent back towards each other and terminating at a distance from each other.

5. Assembly according to one of the preceding claims, characterized in that the metal core, the packings, the bearing ring and, where appropriate, the annular washers, are integral with one another.

6. Assembly according to one of the preceding claims, characterized in that the first sealing surface and the bearing surface together form, in cross-section, a substantially right angle.

7. Assembly according to Claim 6, characterized in that the first and second sealing surfaces and the bearing surface are substantially cylindrical, frustoconical and plane respectively.

8. Assembly according to Claim 7, characterized in that a recess (43) of small depth is formed in the first sealing surface, in its region adjacent to the second sealing surface.

9. Assembly according to one of the preceding claims, characterized in that the said tubular element and the said central element belong respectively to the barrel and to the bonnet of a valve.

10. Seal (20) with metal core (21) of substantially annular configuration, capable of forming part of an assembly according to one of the preceding claims, this seal comprising substantially annular first and second sealing surfaces (24, 23) and a substantially annular bearing surface (32) adjacent to the first sealing surface, the first and second sealing surfaces together forming an acute angle, and the bearing surface being included within the said acute angle, and comprising a first packing (46) made from soft material accommodated in a rebate (40) of the metal core formed in the first sealing surface and in the bearing surface, characterized by a second packing (48) made from soft material accommodated in a countersink (42) of the metal core formed in the second sealing surface, and by a rigid bearing ring (47) covering the first packing on the side of the bearing surface and capable of being displaced in the axial direction with compression of the first packing until it becomes accommodated in the said rebate, coming flush with the metal core so as to define the bearing surface (32).

11. Method for producing an assembly according to one of Claims 1 to 9, in which the central element (6) is placed inside the tubular element (8), the seal is arranged in the said housing, its first and second sealing surfaces (24, 23) coming into a position opposite the said inner surface and into contact with the said annular surface of the central element respectively, and the bearing ring (47) projecting axially with respect to the core, and the bearing element (10) is arranged integral with the tubular element, opposite the bearing surface, and then the central element is displaced axially relative to the tubular element so as to bring the bearing ring (47) against the bearing element, and cause it to penetrate the rebate until the bearing element and the annular surface of the central element come into contact with the metal core.

## Patentansprüche

1. Aufbau, der folgendes umfaßt: ein röhrenförmiges Glied (8), ein mittleres Glied (6), von dem eine ringförmige Fläche (5) mit der Innenfläche (7) des röhrenförmigen Glieds eine ringförmige Aufnahme bildet, eine Dichtung (20) mit metallischem Kern (21) mit im wesentlichen ringförmiger Konfiguration, die in der Aufnahme angeordnet ist, wobei die Dichtung eine erste und zweite Dichtungsfläche (24, 23) und neben der ersten Dichtungsfläche eine Stützfläche (32), die im wesentlichen ringförmig sind, aufweist, wobei zwischen der ersten und zweiten Dichtungsfläche ein spitzer Winkel gebildet wird und die Stützfläche in dem spitzen Winkel enthalten ist, und ein Stützglied (10), das auf die Stützfläche einen Druck in axialer Richtung ausübt, um die Dichtungsflächen dicht an die Innenfläche bzw. die ringförmige Fläche (7, 5) anzulegen, wobei die Dichtung eine erste Packung (46) aus weichem Material umfaßt, die sich in einer in der ersten Dichtungsfläche und in der Stützfläche ausgebildeten Fuge (40) des metallischen Kerns befindet, dadurch gekennzeichnet, daß die Dichtung eine in einer in der zweiten Dichtungsfläche ausgebildeten Senkung (42) des metallischen Kerns untergebrachte zweite Packung (48) aus weichem Material sowie einen steifen Stützring (47) umfaßt, der die erste Packung auf der Seite der Stützfläche bedeckt und ebenfalls in der Fuge derart untergebracht ist, daßer bündig mit dem metallischen Kern liegt, um die Stützfläche (32) in Berührung mit dem Stützglied (10) festzulegen, wobei die dichte Berührung der ersten und zweiten Dichtungsfläche durch die erste bzw. zweite Packung gewährleistet wird.

2. Aufbau nach Anspruch 1, dadurch gekennzeichnet, daß die erste und zweite Packung aus expandiertem Graphit bestehen, wobei die Volumen für deren Aufnahmen so ausgewählt werden, daß die Dichte des Graphits in der zusammengebauten Dichtung zwischen ca. 1,6 und 1,9 liegt.

3. Aufbau nach einem der Ansprüche 1 und 2, dadurch gekennzeichnet, daß er Haltemittel (44, 45) umfaßt, um das Kriechen der ersten Packung entlang der ersten Dichtungsfläche gegenüber einerseits den metallischen Kern und andererseits dem Stützring zu verhindern.

4. Aufbau nach Anspruch 3, dadurch gekennzeichnet, daß die Haltemittel zwei ringförmige Manschetten (44, 45) umfassen, zwischen denen die erste Packung in Stützrichtung des Stützrings eingezwängt ist, wobei die beiden Manschetten in Höhe der ersten Dichtungsfläche jeweils zueinander umgebogene Ränder aufweisen, die in einem Abstand voneinander abschließen.

5. Aufbau nach einem der vorhergehenden Ansprüche, dadurch gekennzeichnet, daß der metallische Kern, die Packungen, der Stützring und gegebenenfalls die ringförmigen Manschetten fest miteinander verbunden sind.

6. Aufbau nach einem der vorhergehenden Ansprüche, dadurch gekennzeichnet, daß zwischen der ersten Dichtungsfläche und der Stützfläche im Querschnitt ein im wesentlichen rechter Winkel gebildet wird.

7. Aufbau nach Anspruch 6, dadurch gekennzeichnet, daß die erste und zweite Dichtungsfläche und die Stützfläche im wesentlichen zylindrisch, kegelstumpfförmig bzw. eben sind.

8. Aufbau nach Anspruch 7, dadurch gekennzeichnet, daß eine Vertiefung (43) geringer Tiefe in der ersten Dichtungfläche in deren neben der zweiten Dichtungsfläche liegendem Bereich ausgebildet ist.

9. Aufbau nach einem der vorhergehenden Ansprüche, dadurch gekennzeichnet, daß das röhrenförmige Glied und das mittlere Glied zum Zylinder bzw. zum Deckel eines Ventils gehören.

10. Dichtung (20) mit metallischem Kern (21) mit im wesentlichen ringförmiger Konfiguration, die dazu geeignet ist, Teil eines Aufbaus nach einem der vorhergehenden Ansprüche zu bilden, wobei diese Dichtung eine erste und zweite Dichtungsfläche (24, 23) und neben der ersten Dichtungsfläche eine Stützfläche (32), die im wesentlichen ringförmig sind, aufweist, wobei zwischen der ersten und zweiten Dichtungsfläche ein spitzer Winkel gebildet wird und die Stützfläche in dem spitzen Winkel enthalten ist, und eine erste Packung (46) aus weichem Material umfaßt, die sich in einer in der ersten Dichtungsfläche und der Stützfläche ausgebildeten Fuge (40) des metallischen Kerns befindet, gekennzeichnet durch eine in einer in der zweiten Dichtungsfläche ausgebildeten Senkung (42) des metallischen Kerns untergebrachte zweite Packung (48) aus weichem Material und durch einen steifen Stützring (47), der die erste Packung auf der Seite der Stützfläche bedeckt und sich unter Zusammendrücken der ersten Packung in axialer Richtung bewegen kann, bis sie in der Fuge bündig mit dem metallischen Kern untergebracht ist, um die Stützfläche (32) festzulegen.

11. Verfahren zur Herstellung eines Aufbaus nach einem der Ansprüche 1 bis 9, bei dem man das mittlere Glied (6) in dem röhrenförmigen Glied (8) anbringt, die Dichtung in der Aufnahme anordnet, wobei deren erste und zweite Dichtungsfläche (24, 23) jeweils gegenüber der Innenfläche zum Liegen und mit der ringförmigen Fläche des mittleren Glieds in Berührung kommen und der Stützring (47) in Axialrichtung gegenüber dem Kern vorkragt, und das Stützglied (10) in fester Verbindung mit dem röhrenförmigen Glied gegenüber der Stützfläche anordnet, dann das mittlere Glied gegenüber dem röhrenförmigen Glied in Axialrichtung derart verschiebt, daß der Stützring (47) an das Stützglied gebracht wird und so weit in die Fuge eindringt, bis das Stützglied und die ringförmige Fläche des mittleren Glieds den metallischen Kern berühren.
